(19) **Europäisches Patentamt / European Patent Office / Office européen des brevets**

(11) **EP 2 546 292 B1**

(12) **EUROPEAN PATENT SPECIFICATION**

(45) Date of publication and mention of the grant of the patent:
**04.12.2019 Bulletin 2019/49**

(51) Int Cl.:
**C08J 9/00** *(2006.01)*

(21) Application number: **12175904.7**

(22) Date of filing: **11.07.2012**

(54) **RESIN FOAM AND FOAM SEALING MATERIAL**

**HARZSCHAUM UND SCHAUMABDICHTMATERIAL**

**MOUSSE DE RÉSINE ET MATÉRIAU D'ÉTANCHÉITÉ EN MOUSSE**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.07.2011 JP 2011155357**
**08.05.2012 JP 2012106973**

(43) Date of publication of application:
**16.01.2013 Bulletin 2013/03**

(73) Proprietor: **NITTO DENKO CORPORATION**
**Ibaraki-shi, Osaka 567-8680 (JP)**

(72) Inventors:
• **Kato, Kazumichi**
**Ibaraki-shi, Osaka 567-8680 (JP)**
• **Saitou, Makoto**
**Ibaraki-shi, Osaka 567-8680 (JP)**
• **Hatanaka, Itsuhiro**
**Ibaraki-shi, Osaka 567-8680 (JP)**
• **Kodama, Kiyoaki**
**Ibaraki-shi, Osaka 567-8680 (JP)**

(74) Representative: **Grünecker Patent- und Rechtsanwälte**
**PartG mbB**
**Leopoldstraße 4**
**80802 München (DE)**

(56) References cited:
**EP-A1- 2 000 500     US-A1- 2010 233 457**

**Description**

Technical Field

The present invention relates to a resin foam and a foam sealing material comprising the resin foam. More specifically, the present invention relates to a resin foam having excellent flexibility and dustproofness, a low spreadability, a small elongation at break, and good assemblability, and to a sealing material comprising the resin foam.

Background Art

Foams (resin foams) have been used for fixing optical members such as image display members (such as image display members which are fixed to image display devices such as liquid crystal displays, electroluminescence displays, and plasma displays) and cameras and lenses (such as cameras and lenses which are fixed to so-called "cellular phones" and "personal digital assistants") to a predetermined site (such as a fixing part). Flexibility is required in a foam used in this site, and examples of such a foam include a urethane foam. Among the urethane foam, one having a relatively high expansion ratio is preferred, and specifically, a polyurethane foam having a density of 0.1 to 0.15 g/cm$^3$ is known (refer to Patent Literature 1).

In recent years, as the products (such as the image display devices, cellular phones, and personal digital assistants as described above) on which optical members (such as image display devices, cameras, and lenses) are mounted (set) are reduced in thickness, the clearance (gap, space) of the portion in which the foams are used tends to be reduced. Therefore, assemblability has been required in the foams.

Further, with the reduction in clearance (with the clearance becoming narrow), a shape with steps has been observed as a shape of the portion in which the foams are used (such as a portion in which the optical members as described above are inserted). Therefore, there is a demand in providing a foam excellent in step followability.

However, the above polyurethane foam still has insufficient flexibility and may have a problem in terms of step followability or cushioning characteristics.

Further, as a foam excellent in step followability, there is known a foam (resin foam) which has not only excellent dustproofness but also excellent flexibility that can follow even a fine clearance (refer to Patent Literature 2). However, the above foam has such a problem that since it has excellent flexibility but has a low tensile modulus of elasticity, it is stretched when it is pulled, that is, it is plastically deformed when it is pulled, and a predetermined size cannot be obtained. For example, there has been a case where the above foam cannot be assembled and bonded to size when an optical member is assembled to a housing (such as a housing of a large-sized liquid crystal television) or the like.

Generally, when a thin, elongated ribbon-like foam sealing material is assembled to a frame-shaped housing such as a housing of a liquid crystal panel, it is often assembled while being pulled. A conventional foam sealing material (for example, a foam sealing material comprising the above resin foam of Patent Literature 2) which satisfies flexibility required as a sealing material has such a problem that when it is pulled, it is stretched to a length exceeding a desired size, thus preventing it from being assembled. For further examples of conventional foam sealing materials, reference is made to Patent Literature 3 and 4.

Citation List

Patent Literature

Patent Literature 1: JP 2005-227392 A1
Patent Literature 2: JP 2005-97566 A1
Patent Literature 3: EP 2 000 500 A1
Patent Literature 4: US 2010/233457 A1

Summary of Invention

Technical Problem

In recent years, a higher dustproofness than before is required in foams with the enlargement and enhanced functionality (loading of a touch panel function as an information input function) of the image display parts mounted in cellular phones, personal digital assistants, and liquid crystal televisions.

Further, reduction in thickness and size is required in electric or electronic appliances such as cellular phones, personal digital assistants, and liquid crystal televisions, and in turn reduction in thickness and size is required also in the optical members mounted in the equipment. Therefore, for example, with the reduction in the line width of the optical member used, it may be more difficult to handle a foam to be assembled thereto. Accordingly, assemblability (spreadability) is further required in the foam as important characteristics.

Accordingly, an object of the present invention is to provide a resin foam excellent in dustproofness and assemblability.

Solution to Problem

After intensive investigations for achieving the above object, the present inventors have found that good dustproofness and assemblability are obtained when a resin foam has a repulsive stress at 80% compression and a tensile modulus of elasticity within a predetermined range. The present invention has been completed based on these findings.

Specifically, the present invention provides a resin foam having a repulsive stress at 80% compression of 1.0 to 9.0 $N/cm^2$ and a tensile modulus of elasticity of 5.0 to 14.0 MPa, wherein the repulsive stress at 80% compression is defined as a repulsive stress when a resin foam is compressed by 80% of the initial thickness, the tensile modulus of elasticity and the repulsive stress at 80% compression being determined in accordance with JIS K6767, wherein the resin foam has an average cell diameter of 15 to 100 $\mu$m and an apparent density of 0.01 to 0.10 $g/cm^3$, the average cell diameter being determined by capturing an enlarged image of a cellular portion of a resin-foam cross section using a microscope, measuring the area of all the cells appeared in a definite area (1 $mm^2$) of the cut surface, converting the area to the equivalent circle diameter, and then averaging it with the number of cells; and wherein the resin foam comprises a polypropylene and an olefinic thermoplastic vulcanizate (TPV).

The resin foam is preferably formed through the steps of impregnating a resin composition with an inert gas and subjecting the impregnated resin composition to decompression. The inert gas is preferably carbon dioxide. Further, the inert gas is preferably in a supercritical state.

In addition, the present invention provides a foam sealing material comprising the resin foam.

The foam sealing material preferably has an adhesive layer formed on the resin foam. The adhesive layer is preferably formed through a film layer. Further, the adhesive layer is preferably an acrylic pressure-sensitive adhesive layer.

Advantageous Effects of Invention

Since the resin foam of the present invention has a repulsive stress at 80% compression and a tensile modulus of elasticity within a predetermined range, it is excellent in dustproofness and assemblability (ease of arranging or fixing to a predetermined place).

Brief Description of Drawings

[Figure 1] Figure 1 is a schematic outline view of a test piece used for measurement of a dustproofness index.
[Figure 2] Figure 2 is a schematic outline view of a test piece used for measurement of a dustproofness index, the test piece having steps provided by inserting spacers.
[Figure 3] Figure 3 is a schematic diagram of a dustproofness testing instrument.
[Figure 4] Figure 4 is an end view of the sectioned part of the A-A' line of the dustproofness testing instrument.

Description of Embodiments

The resin foam of the present invention is a foam comprising a resin, and is obtained by subjecting a resin composition to foam molding. The resin composition is a composition used for forming the resin foam of the present invention, and contains at least a polypropylene and an olefinic thermoplastic vulcanizate (TPV). The shape of the resin foam of the present invention is preferably a sheet form (including a film form) and a tape form, but is not particularly limited thereto.

The resin foam of the present invention preferably has a closed cell structure or semi-open/semi-closed cell structure as a cell structure in terms of the coexistence of dustproofness and flexibility, but is not particularly limited thereto. The semi-open/semi-closed cell structure is a cell structure containing both a closed cell moiety and an open cell moiety, and the ratio between these moieties is not particularly limited. The resin foam of the present invention preferably has a semi-open/semi-closed cell structure as a cell structure, and the resin foam preferably has a cell structure in which a closed cell moiety occupies 40% or less, more preferably 30% or less.

The average cell diameter of the cell structure of the resin foam of the present invention is 15 to 100 $\mu$m, preferably 20 to 80 $\mu$m. When the upper limit of the average cell diameter is set to 100 $\mu$m or less, dustproofness can be increased, and light blocking effect can be improved. Further, when the lower limit of the average cell diameter is set to 15 $\mu$m or more, flexibility and cushioning properties (impact absorbing properties) can be improved.

The cell structure and the average cell diameter of the resin foam can be determined, for example, by cutting the resin foam, capturing an image of the cell structure of the cross section with a digital microscope, and analyzing the image.

The apparent density of the resin foam of the present invention is 0.01 to 0.10 g/cm$^3$, preferably 0.02 to 0.08 g/cm$^3$. If the apparent density is less than 0.01 g/cm$^3$, a problem in strength may occur, thereby preventing good processability (particularly punchability) from being obtained. On the other hand, if the apparent density exceeds 0.10 g/cm$^3$, flexibility may be reduced to reduce followability to fine clearance.

The repulsive stress at 80% compression of the resin foam of the present invention is 1.0 to 9.0 N/cm$^2$, preferably 1.5 to 8.0 N/cm$^2$, more preferably 2.0 to 7.0 N/cm$^2$ in terms of dustproofness and flexibility. Note that the repulsive stress at 80% compression is a repulsive stress when a resin foam is compressed by 80% of the initial thickness.

Further, the repulsive stress at 50% compression of the resin foam of the present invention is preferably 0.1 to 4.0 N/cm$^2$, more preferably 0.5 to 3.0 N/cm$^2$, in terms of dustproofness and flexibility, but is not particularly limited thereto. Note that the repulsive stress at 50% compression is a repulsive stress when a resin foam is compressed by 50% of the initial thickness.

Since the resin foam of the present invention has such a repulsive stress at compression, particularly the repulsive stress at 80% compression as described above, it is excellent in dustproofness and flexibility. It is also excellent in followability to fine clearance, particularly followability to fine clearance having fine steps. Examples of the fine clearance include a clearance having a size of 0.05 to 2.5 mm. Further, the size of the fine step in the above fine clearance having fine steps is, for example, 10 to 500 $\mu$m.

The tensile modulus of elasticity of the resin foam of the present invention is 5.0 to 14.0 MPa, preferably 5.5 to 13.5 MPa, more preferably 6.0 to 13.0 MPa. Since the resin foam of the present invention has such a tensile modulus of elasticity, it has low spreadability and is excellent in assemblability. Note that if the tensile modulus of elasticity is less than 5.0 MPa, the resin foam may be plastically deformed to an extent that a desired size is exceeded when it is pulled, which may lead to a problem that the resin foam cannot be applied to the clearance. The tensile modulus of elasticity is determined by the tensile test according to JIS K 6767.

The breaking strength (tensile strength) of the resin foam of the present invention (particularly, in the case of a resin foam in a sheet form, breaking strength in the MD direction) is preferably 0.60 to 1.10 MPa, more preferably 0.70 to 1.05 MPa, in terms of assemblability, particularly workability in assembling operation, but is not particularly limited thereto. Note that the breaking strength is determined based on JIS K 6767.

The elongation at break (elongation) of the resin foam of the present invention (particularly, in the case of a resin foam in a sheet form, elongation at break in the MD direction) is preferably 50 to 200%, more preferably 80 to 150%, in terms of assemblability, particularly workability in assembling operation, but is not particularly limited thereto. Note that the elongation at break is determined based on JIS K 6767.

The resin foam of the present invention comprises a polypropylene resin.

The thermoplastic resin also includes an olefinic elastomer. This is because an olefinic elastomer has good compatibility with a polypropylene resin.

The olefinic elastomer is of a type in which the resin component A and the rubber component B are dynamically heat-treated in the presence of a crosslinking agent (thermoplastic vulcanizate, TPV).

In particular, an olefinic thermoplastic vulcanizate (TPV) is used as the olefinic elastomer, in terms of improving dustproofness, flexibility, and step followability by reducing the repulsive stress at compression (repulsive stress at 50% compression and repulsive stress at 80% compression) and in terms of improving assemblability by reducing elongation at break by controlling tensile modulus of elasticity. That is, the resin foam of the present invention comprises an olefinic thermoplastic vulcanizate (TPV). Note that TPV (olefinic thermoplastic vulcanizate) has a higher modulus of elasticity and a smaller compression set than TPO (uncrosslinked thermoplastic olefinic elastomer). Therefore, when the resin foam of the present invention comprises an olefinic thermoplastic vulcanizate (TPV), the recovery properties after the foam is released from a compression state will be improved, thereby capable of further improving dustproofness; and the elasticity will also be improved, thereby capable of further improving assemblability. Further, when the resin foam of the present invention comprises an olefinic thermoplastic vulcanizate (TPV), an end will not collapse at punching, thereby capable of improving processability.

The olefinic thermoplastic vulcanizate is obtained by dynamically heat-treating a mixture containing a resin component A (olefinic resin component A) forming a matrix and a rubber component B forming a domain in the presence of a crosslinking agent, and is a multiphase polymer having a sea island structure in which crosslinked rubber particles are finely dispersed as a domain (island phase) in the resin component A which is a matrix (sea phase).

Note that when an olefinic thermoplastic vulcanizate is incorporated into the resin foam of the present invention, a composition comprising the olefinic thermoplastic vulcanizate and additives (such as a colorant such as carbon black and a softener) may be used.

In particular, the resin foam of the present invention preferably comprises a material excellent in so-called rubber elasticity in terms of achieving good dustproofness and good assemblability. From this point of view, the resin foam of the present invention comprises a polypropylene resin and the olefinic thermoplastic vulcanizate (TPV).

When the resin foam of the present invention comprises the polypropylene resin and the olefinic thermoplastic vulcanizate (TPV), the proportion of these components is not particularly limited. However, if the proportion of the olefinic thermoplastic vulcanizate (TPV)is too low, the resulting resin foam may have a reduced flexibility or the resin foam may be easily stretched to reduce assemblability. On the other hand, if the proportion of the olefinic thermoplastic vulcanizate (TPV)is too high, outgassing may easily occur during the formation of the foam, thereby preventing a highly expanded foam from being obtained. Therefore, with respect to the proportion of the polypropylene resin and the olefinic thermoplastic vulcanizate (TPV), the proportion of the former:the latter (on the basis of weight) is preferably 80:20 to 30:70, more preferably 60:40 to 30:70, further preferably 50:50 to 30:70, but is not particularly limited thereto.

In particular, in the resin foam of the present invention comprising polypropylene and the olefinic thermoplastic vulcanizate (TPV), the proportion in terms of the former:the latter (on the basis of weight) is preferably 80:20 to 30:70, more preferably 70:30 to 30:70, further preferably 60:40 to 30:70.

A resin composition for forming the resin foam of the present invention may contain additives. For example, the resin composition preferably contains a nucleating agent. When the nucleating agent is contained, the cell diameter of the cellular structure of the resin foam can be easily controlled, and a resin foam having proper flexibility and excellent in cutting processability can be obtained.

Examples of the nucleating agent include oxides, composite oxides, metal carbonates, metal sulfates, metal hydroxides such as talc, silica, alumina, zeolite, calcium carbonate, magnesium carbonate, barium sulfate, zinc oxide, titanium oxide, aluminum hydroxide, magnesium hydroxide, mica, and montmorillonite; carbon particles, glass fiber, and carbon tubes. Note that the nucleating agent may be used alone or in combination.

The average particle size of the nucleating agent is preferably 0.3 to 1.5 μm, more preferably 0.4 to 1.2 μm, but is not particularly limited thereto. If the average particle size is too small, it may not sufficiently function as a nucleating agent, and on the other hand, if the average particle size is too large, the nucleating agent may break through the wall of a cell, which may prevent a high expansion ratio from being obtained. Note that the average particle size can be measured by a laser diffraction particle size distribution measuring method. For example, the average particle size can be measured (AUTO measuring mode) from a diluted dispersion of a sample by "MICROTRAC MT-3000" supplied by Leeds & Northrup Instruments, Inc.

The content of the nucleating agent in the resin composition is preferably 0.5 to 150 parts by weight, more preferably 2 to 140 parts by weight, further preferably 3 to 130 parts by weight, relative to 100 parts by weight of the resin, but is not particularly limited thereto. If the content is less than 0.5 parts by weight, the effect of the incorporation of a nucleating agent as described above may not be obtained, and on the other hand, if the content exceeds 150 parts by weight, foaming may be prevented when the resin composition is expanded.

The resin composition preferably contains a flame retardant as an additive. Since the resin foam of the present invention comprises a resin, it burns easily. For this reason, when the resin foam of the present invention is used for applications in which it is indispensable to impart flame retardancy such as electric appliance or electronic appliance application, a flame retardant is preferably contained in the resin composition.

The flame retardant is not particularly limited. However, chlorine-based and brominated flame retardants have a problem of generating harmful gas when they burn, and phosphorus and antimony flame retardants have problems such as harmfulness and explosibility. Therefore, non-halogen non-antimony inorganic flame retardants are preferred. Examples of the inorganic flame retardants include hydrates of metal hydroxides and metal compounds. More specific examples include aluminum hydroxide, magnesium hydroxide, magnesium oxide, a hydrate of nickel oxide, and hydrates of magnesium oxide and zinc oxide. Especially, magnesium hydroxide is preferred. Note that the hydrated metal compounds may be surface-treated. Further, the flame retardant may be used alone or in combination.

The content of the flame retardant in the resin composition is preferably 5 to 70 parts by weight, more preferably 25 to 65 parts by weight, relative to 100 parts by weight of the resin, but is not particularly limited thereto. If the content is less than 5 parts by weight, sufficient flame retardancy may not be obtained in the resin foam, and on the other hand, if the content exceeds 70 parts by weight, a highly expanded resin foam may not be obtained.

The resin composition may contain, as an additive, at least one aliphatic compound having a polar functional group and a melting point of 50 to 150°C, which is selected from among fatty acid, fatty amide, and fatty acid metallic soap. Note that in the present application, such an aliphatic compound may be simply referred to as an "aliphatic compound."

The resin foam formed from the resin composition containing the aliphatic compound has a cell structure which is not easily collapsed when it is processed (particularly, when it is punched), is excellent in shape recovery properties, and is excellent in processability (particularly, punchability). Note that it is estimated that processability is improved because such an aliphatic compound has high crystallinity and forms a strong film on a resin surface, and the film serves to prevent the walls of cells which form a cell structure from being blocked to each other.

The aliphatic compound having a highly polar functional group is not easily dissolved particularly in polyolefin resins, and therefore it is easily precipitated on the surface of the resin foam, thus easily exhibiting the effect as described above.

The melting point of the aliphatic compound is preferably 50 to 150°C, more preferably 70 to 100°C, in terms of reducing the molding temperature for foam molding the resin composition, suppressing the degradation of resins (particularly, polyolefin resins), and imparting sublimation resistance.

Fatty acids and fatty amides are particularly preferred as the aliphatic compound.

As the fatty acids, those having 18 to 38 (preferably 18 to 22) carbon atoms are preferred, and specific examples thereof include stearic acid, behenic acid, and 12-hydroxy stearic acid. Especially, behenic acid is particularly preferred. As the fatty amides, those having 18 to 38 (preferably 18 to 22) carbon atoms are preferred, which may be any of monoamide and bisamide. Specific examples thereof include stearamide, oleamide, erucamide, methylene bis-stearamide, and ethylene bis-stearamide. Especially, erucamide is particularly preferred. Further, examples of the fatty acid metallic soap include fatty acid salt of aluminum, calcium, magnesium, lithium, barium, zinc, and lead.

The content of the aliphatic compound in the resin composition is preferably 1 to 5 parts by weight, more preferably 1.5 to 3.5 parts by weight, further preferably 2 to 3 parts by weight, relative to 100 parts by weight of the resin, but is not particularly limited thereto. If the content is less than 1 part by weight, sufficient amount of the aliphatic compound will not be precipitated on the surface of the resin, making it difficult to obtain the effect of improvement of processability. On the other hand, if the content exceeds 5 parts by weight, the resin composition will be plasticized and cannot maintain sufficient pressure during the foam molding. This causes the reduction in the content of a foaming agent (for example, an inert gas such as carbon dioxide), making it difficult to obtain a high expansion ratio. Therefore, a resin foam having a desired density may not be obtained.

Further, the resin composition may contain a lubricant as an additive. When the lubricant is contained, it improves the fluidity of the resin composition, and thermal degradation of a resin can be suppressed. Examples of the lubricant include, but are not limited to, hydrocarbon lubricants such as liquid paraffin, paraffin wax, microcrystalline wax, and polyethylene wax; and ester lubricants such as butyl stearate, stearic acid monoglyceride, pentaerythritol tetrastearate, hydrogenated castor oil, and stearyl stearate. Note that the lubricant is used alone or in combination. The content of the lubricant in the resin composition is suitably selected in the range that does not impair the effect of the present invention.

Examples of the additives other than the above include shrink resistant agents, age inhibitors, heat stabilizers, light resistant agents such as HALS, weathering agents, metal deactivators, ultraviolet absorbers, light stabilizers, stabilizers such as copper inhibitors, antimicrobial agents, antifungal agents, dispersing agents, tackifiers, colorants such as carbon black and organic pigments, and fillers. Note that the additives are used alone or in combination. The content of these additives is suitably selected in the range that does not impair the effect of the present invention.

The resin composition forming the resin foam of the present invention is obtained by mixing and kneading the above resin and other components. For example, the resin composition containing the thermoplastic resin, the rubber component and/or thermoplastic elastomer component, and additives are obtained by mixing and kneading these components. Note that the mixing and kneading of the resin and other components may be performed in a high temperature atmosphere, for example, in a temperature atmosphere of 180 to 250°C.

In the resin foam of the present invention, examples of the foaming process employed in the foam molding of the resin composition include, but are not limited to, generally used techniques such as a physical technique and a chemical technique. A common physical technique is a technique of forming cells by dispersing a low-boiling-point liquid (foaming agent) such as chlorofluorocarbon or hydrocarbon in a resin followed by heating to volatilize the foaming agent. Further, a common chemical technique is a technique of forming cells by a gas produced by thermal decomposition of a compound (foaming agent) added to a resin. However, in the common physical technique, there may occur problems about the combustibility, toxicity, and influence on the environment such as ozone layer depletion of the substance used as a blowing agent. Further, in the common chemical technique, a residue of a blowing gas remains in the foam. This may cause a trouble of contamination by a corrosive gas or impurities in the gas especially in electronic appliances where suppression of contamination is highly needed. Moreover, these physical and chemical foaming techniques are believed to be difficult to give a micro cell structure and to be very difficult to give micro cells of 300 μm or less.

Therefore, a preferred foaming process in the present invention includes a technique of using a high-pressure gas as a foaming agent, particularly a technique of using a high-pressure inert gas as a foaming agent, in that a resin foam having a small cell diameter and a high cell density can be easily obtained. Note that inert gas means a gas inert to a resin in a resin composition. That is, the cell structure (foaming structure) of the resin foam of the present invention is preferably formed by a technique of using a high-pressure inert gas as a foaming agent. More specifically, the resin foam of the present invention is preferably formed through the steps of impregnating a resin composition with a high-pressure gas and subjecting the impregnated resin composition to decompression.

The inert gas is not particularly limited as long as it is inert to the resin contained in the resin foam and the resin can be impregnated therewith, and examples thereof include carbon dioxide, nitrogen gas, and air. Note that the inert gas may be a mixed gas comprising two or more gases. Among others, the inert gas is preferably carbon dioxide, in that the resin can be impregnated with it in a large amount and at a high rate.

Further, from the viewpoint of increasing the rate of impregnation of the resin composition, the high-pressure gas (particularly inert gas, such as carbon dioxide) is preferably in a supercritical state. Such a gas in a supercritical state shows increased solubility in the resin and can be incorporated therein in a higher concentration. In addition, because of its high concentration, the supercritical gas generates a larger number of cell nuclei upon an abrupt pressure drop after impregnation. These cell nuclei grow to give cells, which are present in a higher density than in a foam having the same porosity but produced with the gas in another state. Consequently, use of a supercritical gas can give micro cells. Note that the critical temperature and critical pressure of carbon dioxide are 31°C and 7.4 MPa, respectively.

In forming the resin foam of the present invention, the process of subjecting the resin composition to foam molding by a technique using a high-pressure gas as a foaming agent may include a batch system and a continuous system. In the batch system, the resin composition is previously molded into an unfoamed resin molded article (unfoamed resin molded product) in an adequate form such as a sheet form, and then the unfoamed resin molded article is impregnated with a high-pressure gas, and the unfoamed resin molded article is then released from the pressure to allow the molded article to expand. In the continuous system, the resin composition is kneaded under a pressure together with a high-pressure gas, and the kneaded mixture is molded into a molded article and, simultaneously, is released from the pressure. Thus, molding and foaming are performed simultaneously in the continuous system.

Examples of the process for forming the unfoamed resin molded article used for foaming, when the resin composition is subjected to foam molding by a batch system, include a process in which the resin composition is extruded with an extruder such as a single-screw extruder or twin-screw extruder; a process in which the resin composition is uniformly kneaded beforehand with a kneading machine equipped with one or more blades typically of a roller, cam, kneader, or Banbury type, and the resulting mixture is press-molded typically with a hot-plate press to thereby produce an unfoamed resin molded article having a predetermined thickness; and a process in which the resin composition is molded with an injection molding machine. Further, the unfoamed resin molded article is also formed by other forming processes in addition to extrusion, press molding, and injection molding. Furthermore, the shape of the unfoamed resin molded article is not particularly limited, and various shapes can be selected depending on applications. Examples of the shape include a sheet form, roll form, and plate form. Thus, when the resin composition is subjected to foam molding by a batch system, the resin composition is formed by a suitable process to give an unfoamed resin molded article having a desired shape and thickness.

When the resin composition is subjected to foam molding by the above batch system, cells are formed in the resin through a gas impregnation step of putting the unfoamed resin molded article obtained as described above in a pressure-tight vessel (high pressure vessel) and injecting (introducing) a high-pressure gas (particularly an inert gas, such as carbon dioxide) to impregnate the unfoamed resin molded article with the high-pressure gas; a decompression step of releasing the pressure (typically, to atmospheric pressure) when the unfoamed resin molded article is sufficiently impregnated with the high-pressure gas to allow cell nuclei to be generated in the resin; and optionally (where necessary) a heating step of heating the resin to allow the cell nuclei to grow. Note that the cell nuclei may be allowed to grow at room temperature without providing the heating step. After the cells are allowed to grow in this way, the resin may be rapidly cooled with cold water as needed to fix its shape. Further, the introduction of the high-pressure gas may be performed continuously or discontinuously. Note that the heating for the growth of cell nuclei can be performed according to a known or common procedure such as heating with a water bath, oil bath, hot roll, hot-air oven, far-infrared rays, near-infrared rays, or microwaves.

The foam molding of the resin composition by the above continuous system more specifically includes foam molding by a kneading/impregnation step of kneading the resin composition with an extruder such as a single-screw extruder or twin-screw extruder and, during this kneading, injecting (introducing) a high-pressure gas (particularly inert gas, such as carbon dioxide) to impregnate the resin composition with the sufficiently high-pressure gas; and a subsequent molding/decompression step of extruding the resin composition through a die arranged at a distal end of the extruder to thereby release the pressure (typically, to atmospheric pressure) to perform molding and foaming simultaneously. Further, in the foam molding of the resin composition in the continuous system, a heating step may be further provided to enhance cell growth by heating where necessary. After the cells are allowed to grow in this way, the resin may be rapidly cooled with cold water as needed to fix its shape. Further, the introduction of the high-pressure gas may be performed continuously or discontinuously. Further, in the kneading/impregnation step and molding/decompression step, an injection molding machine or the like may be used in addition to an extruder. Note that the heating for the growth of cell nuclei can be performed according to a known or common procedure such as heating with a water bath, oil bath, hot roll, hot-air oven, far-infrared rays, near-infrared rays, or microwaves.

The mixed amount of the gas in the foam molding of the resin composition is, for example, preferably 2 to 10% by weight, more preferably 2.5 to 8% by weight, further preferably 3 to 6% by weight, relative to the total amount of the resin composition (total weight, 100% by weight), but is not particularly limited thereto. If the mixed amount of the gas is less than 2%, it may be unable to obtain a highly expanded resin foam, and on the other hand, if it exceeds 10%, the gas may be separated in a molding machine, preventing a highly expanded resin foam from being obtained.

In the gas impregnation step in the batch system or in the kneading/impregnation step in the continuous system, the pressure at which the unfoamed resin molded article or the resin composition is impregnated with a gas is suitably selected in consideration of the type of gas and the operability. For example, when an inert gas, particularly carbon dioxide, is used as the gas, the pressure is preferably 6 MPa or more (for example, 6 to 100 MPa), more preferably 8 MPa or more (for example, 8 to 100 MPa). If the pressure of the gas is lower than 6 MPa, considerable cell growth may occur during foaming, and this may tend to result in too large cell diameters and hence in disadvantages such as insufficient dustproofing effect. The reasons for this are as follows. When impregnation is performed at a low pressure, the amount of gas impregnated is relatively small and cell nuclei are formed at a lower rate as compared with impregnation at higher pressures. As a result, the number of cell nuclei formed is smaller. Because of this, the gas amount per cell increases rather than decreases, resulting in excessively large cell diameters. Furthermore, in a region of pressures lower than 6 MPa, only a slight change in impregnation pressure results in considerable changes in cell diameter and cell density, and this may often impede the control of cell diameter and cell density.

Further, in the gas impregnation step in the batch system or in the kneading/impregnation system in the continuous system, the temperature at which the unfoamed resin molded article or the resin composition is impregnated with a high-pressure gas varies depending on the type of gas and resin used, and can be selected within a wide range. For example, when impregnation operability and other conditions are taken into account, the temperature at which the unfoamed resin molded article or the resin composition is impregnated with a gas is preferably 10 to 350°C. More specifically, when an unfoamed resin molded article in a sheet form is impregnated with a high-pressure gas in the batch system, the impregnation temperature is preferably 10 to 250°C, more preferably 40 to 240°C, further preferably 60 to 230°C. Further, when a high-pressure gas is injected into and kneaded with a resin composition in the continuous system, the impregnation temperature is preferably 60 to 350°C, more preferably 100 to 320°C, further preferably 150 to 300°C. Note that when carbon dioxide is used as a high-pressure gas, it is preferred to impregnate the gas at a temperature (impregnation temperature) of 32°C or higher (particularly 40°C or higher), in order to maintain its supercritical state.

Further, the decompression rate in the decompressing step in the foam molding of the resin composition by the batch system or continuous system is preferably 5 to 300 MPa/s in order to obtain uniform micro cells, but is not particularly limited thereto. Furthermore, the heating temperature in the heating step is, for example, 40 to 250°C (preferably 60 to 250°C).

In the resin foam of the present invention, use of the above processes in the foam molding of the resin composition has an advantage that a highly expanded resin foam can be produced and a thick resin foam can be produced. For example, when the resin composition is subjected to foam molding by the continuous system, it is necessary to regulate the gap in the die at the tip of the extruder so as to be as narrow as possible (generally about 0.1 to 1.0 mm) for maintaining the pressure in the extruder in the kneading/impregnation step. This means that for obtaining a thick resin foam, the resin composition which has been extruded through such narrow gap should be foamed at a high expansion ratio. In the known techniques in use, however, a high expansion ratio is not obtained and the resulting resin foam has been limited to thin one (for example, one having a thickness of from 0.5 to 2.0 mm). In contrast, foaming and molding of the resin foam using a high-pressure gas can continuously produce a resin foam having a final thickness of from 0.50 to 5.00 mm.

The cell structure, average cell diameter, apparent density, repulsive stress at compression (repulsive stress at 80% compression, repulsive stress at 50% compression), tensile modulus of elasticity, breaking strength, elongation at break, and the like of the resin foam of the present invention are controlled by suitably selecting and setting the type and amount of the gas used in the foam molding, operating conditions such as temperature, pressure, and time in the gas impregnation step or kneading/impregnation step, operating conditions such as a decompression rate, temperature, and pressure in the decompression step or molding/decompression step, heating temperature in the heating step after decompression or molding/decompression, and the like.

The shape of the resin foam of the present invention is preferably a sheet form or tape form, but is not particularly limited thereto. Further, the resin foam of the present invention may be subjected to processing such as punching and cutting so as to have a desired shape, thickness, and the like. For example, it may be processed to various shapes according to the apparatus, equipment, housing, member, and the like to which it is assembled.

Note that the thickness of the resin foam of the present invention, particularly the thickness of the resin foam when it is in a sheet form or a tape form, is preferably 0.1 to 2.0 mm, more preferably 0.3 to 1.5 mm, but is not particularly limited thereto.

Since the resin foam of the present invention has a repulsive stress at a predetermined compression (particularly, repulsive stress at 80% compression), it is excellent in dustproofness. It is also excellent in flexibility and excellent in step followability. Further, since the resin foam of the present invention has a predetermined tensile modulus of elasticity, it can suppress spreadability to a low level and is excellent in assemblability.

The resin foam of the present invention has good workability. In particular, it is excellent in the workability at the time of assembly. For example, when the resin foam of the present invention is assembled to a housing or the like, it can be bonded to size.

Since the resin foam of the present invention has the above characteristics, it is suitably used as a foam sealing material, particularly as a foam sealing material for electric or electronic appliances.

(Foam Sealing Material)

The foam sealing material of the present invention is a material comprising the above resin foam. Further, the foam sealing material of the present invention may have a structure consisting only of the resin foam, or may have a structure in which the resin foam is laminated with other layers (particularly, an adhesive layer (pressure-sensitive adhesive layer), a base material layer, and the like). Note that the shape of the foam sealing material of the present invention is preferably a sheet form (film form) or a tape form, but is not particularly limited thereto.

The foam sealing material of the present invention preferably has a structure in which the resin foam is laminated with other layers, particularly a structure in which the resin foam is laminated with an adhesive layer. For example, when the foam sealing material of the present invention is a material in a sheet form or in a tape form, it may have an adhesive layer on one side or both sides thereof. When the foam sealing material of the present invention has an adhesive layer, it will be advantageous to fixing or tentative fixing to an adherend, and advantageous in terms of assemblability. Further, a mount for processing can be provided on the resin foam through the adhesive layer.

Examples of the pressure-sensitive adhesives for forming the adhesive layer include, but are not limited to, acrylic pressure-sensitive adhesives, rubber pressure-sensitive adhesives (such as natural rubber pressure-sensitive adhesives and synthetic rubber pressure-sensitive adhesives), silicone pressure-sensitive adhesives, polyester pressure-sensitive adhesives, urethane pressure-sensitive adhesives, polyamide pressure-sensitive adhesives, epoxy pressure-sensitive adhesives, vinyl alkyl ether pressure-sensitive adhesives, and fluorine pressure-sensitive adhesives. These pressure sensitive adhesives may be used alone or in combination. Note that the pressure-sensitive adhesives may be pressure-sensitive adhesives of any form including emulsion pressure-sensitive adhesives, solvent pressure-sensitive adhesives, hot melt type adhesives, oligomer pressure-sensitive adhesives, and solid pressure-sensitive adhesives.

Especially, acrylic pressure-sensitive adhesives are preferred as the pressure-sensitive adhesives from the point of view of the pollution control to adherends and the like. That is, the foam sealing material of the present invention preferably has an adhesive layer formed on the resin foam, particularly an acrylic pressure-sensitive adhesive layer.

The thickness of the adhesive layer is preferably 2 to 100 $\mu$m, more preferably 10 to 100 $\mu$m, but is not particularly limited thereto. The adhesive layer is preferably as thin as possible because a thinner layer has a higher effect of preventing adhesion of soil and dust at an end. Note that the adhesive layer may have any form of a single layer and a laminate.

In the foam sealing material of the present invention, the adhesive layer may be provided through other layers (lower layers). Examples of such lower layers include other adhesive layers, an intermediate layer, an undercoat layer, and a base material layer. Especially, a base material layer is preferred, and a film layer such as a plastic film layer, a nonwoven fabric layer, or the like is particularly preferred in terms of improvement in the breaking strength of the foam.

The foam sealing material of the present invention is used for attaching (mounting) various members or parts to a predetermined site. In particular, it is preferred that the foam sealing material of the present invention is suitably used for attaching (mounting) parts constituting electric or electronic appliances to a predetermined site. That is, the foam sealing material of the present invention is preferably a foam sealing material for electric or electronic appliances.

Examples of the various members or parts which can be attached (mounted) utilizing the foam sealing material of the present invention preferably include, but are not particularly limited to, various members or parts in electric or electronic appliances. Examples of such members or parts for electric or electronic appliances include optical members or optical components such as image display members (displays) (particularly small-sized image display members) which are mounted on image display devices such as liquid crystal displays, electroluminescence displays, and plasma displays, and cameras and lenses (particularly small-sized cameras and lenses) which are mounted on mobile communication devices such as so-called "cellular phones" and "personal digital assistants".

Examples of suitable specific use modes of the foam sealing material of the present invention include using it around a display such as LCD (liquid crystal display) and using by inserting it between a display such as LCD (liquid crystal display) and a housing (window part) for the purpose of dustproofing, shading, cushioning, or the like.

Examples

The present invention will be more specifically described below with reference to examples, but it should be noted that these examples are never construed to limit the scope of the present invention.

(Thermoplastic Elastomer Composition A)

As a thermoplastic elastomer composition A, there was used a composition containing a dynamically crosslinked product (thermoplastic vulcanizate, TPV) of polypropylene (PP) and an ethylene/propylene/5-ethylidene-2-norbornene terpolymer (EPT), and carbon black.

Note that in the TPV, the ratio (former:latter) of polypropylene to the ethylene/propylene/5-ethylidene-2-norbornene terpolymer is 25:75 based on weight. Further, the content of carbon black in the composition is 15.0% by weight.

(Thermoplastic Elastomer Composition B)

As a thermoplastic elastomer composition B, there was used a composition containing a blend (TPO) (EPT part is uncrosslinked; melt flow rate (MFR): 6 g/10 min, JIS A hardness: 79°) of polypropylene (PP) and an ethylene/propylene/5-ethylidene-2-norbornene terpolymer (EPT), and carbon black. Note that the content of carbon black in the composition is 16.7% by weight.

(Lubricant A)

As a lubricant A (lubricant composition A), there was used a masterbatch in which 10 parts by weight of polyethylene was blended with 1 part by weight of stearic acid monoglyceride.

(Nucleating Agent A)

As a nucleating agent A, magnesium hydroxide having an average particle size of 0.8 $\mu$m was used.

(Example 1)

In a twin-screw kneader were kneaded, at a temperature of 200°C, 35 parts by weight of polypropylene [melt flow rate (MFR): 0.35 g/10 min], 60 parts by weight of the thermoplastic elastomer composition A, 5 parts by weight of the lubricant A, and 10 parts by weight of the nucleating agent A. After kneading, the kneaded material was extruded into strands, cooled with water, and cut into pellets, thus obtaining pellets.

The pellets were charged into a tandem single-screw extruder supplied by Japan Steel Works, Ltd., and 3.8% by weight of carbon dioxide gas relative to the total weight (100% by weight) of the pellets was injected at an atmospheric temperature of 220°C and at a pressure of 14 MPa, where the pressure became 18 MPa after injection. The pellets were sufficiently saturated with the carbon dioxide gas, cooled to a temperature suitable for foaming, and extruded through a die, yielding a resin foam (in a sheet form).

Note that the carbon dioxide gas injected into the tandem single-screw extruder immediately became supercritical fluid.

(Example 2)

In a twin-screw kneader were kneaded, at a temperature of 200°C, 35 parts by weight of polypropylene [melt flow rate (MFR): 0.50 g/10 min], 60 parts by weight of the thermoplastic elastomer composition A, 5 parts by weight of the lubricant A, and 10 parts by weight of the nucleating agent A. After kneading, the kneaded material was extruded into strands, cooled with water, and cut into pellets, thus obtaining pellets.

The pellets were charged into a tandem single-screw extruder supplied by Japan Steel Works, Ltd., and 4.6% by weight of carbon dioxide gas was injected at an atmospheric temperature of 220°C and at a pressure of 14 MPa, where the pressure became 18 MPa after injection. The pellets were sufficiently saturated with the carbon dioxide gas, cooled to a temperature suitable for foaming, and extruded through a die, yielding a resin foam (in a sheet form).

Note that the carbon dioxide gas injected into the tandem single-screw extruder immediately became supercritical fluid.

(Example 3)

Pellets were produced in the same manner as in Example 1. Next, a resin foam (in a sheet form) was obtained from the pellets in the same manner as in Example 1 except that 4.8% by weight of carbon dioxide gas was injected.

(Example 4)

Pellets were produced in the same manner as in Example 1. Next, a resin foam (in a sheet form) was obtained from the pellets in the same manner as in Example 1 except that 5.0% by weight of carbon dioxide gas was injected.

(Reference Example 5)

Pellets were produced in the same manner as in Example 1. Next, a resin foam (in a sheet form) was obtained from the pellets in the same manner as in Example 1 except that 3.5% by weight of carbon dioxide gas was injected.

(Comparative Example 1)

In a twin-screw kneader were kneaded, at a temperature of 200°C, 45 parts by weight of polypropylene [melt flow rate (MFR): 0.35 g/10 min], 55 parts by weight of the thermoplastic elastomer composition B, 10 parts by weight of the lubricant A, and 10 parts by weight of the nucleating agent A. After kneading, the kneaded material was extruded into strands, cooled with water, and cut into pellets, thus obtaining pellets.
The pellets were charged into a single-screw extruder supplied by Japan Steel Works, Ltd., and 5.0% by weight of carbon dioxide gas relative to the total weight (100% by weight) of the pellets was injected at an atmospheric temperature of 220°C and at a pressure of 13 MPa, where the pressure became 12 MPa after injection. The pellets were sufficiently saturated with the carbon dioxide gas, cooled to a temperature suitable for foaming, and extruded through a die, yielding a resin foam (in a sheet form).
Note that the carbon dioxide gas injected into the tandem single-screw extruder immediately became supercritical fluid.

(Comparative Example 2)

There was used a commercially available foam essentially comprising polyurethane having an average cell diameter of 160 $\mu$m, a repulsive stress at 50% compression (50% repulsive load) of 0.7 N/cm$^2$, and an apparent density of 0.15 g/cm$^3$.

(Comparative Example 3)

There was used a commercially available foam essentially comprising polyethylene having an average cell diameter of 130 $\mu$m, a repulsive stress at 50% compression (50% repulsive load) of 8.6 N/cm$^2$, and an apparent density of 0.22 g/cm$^3$.

(Apparent Density)

The apparent density of a resin foam was determined as follows.
A resin foam was punched with a punch die having a size of 30 mm $\times$ 30 mm to give a punched sample, and the size (length, width) of the punched sample was measured. The thickness of the sample was measured with a 1/100 dial gauge having a measuring terminal of 20 mm in diameter ($\phi$). The volume of the sample was calculated from the size (length, width) of the sample and the thickness of the sample. Next, the weight of the sample was measured with an even balance. From the volume of the sample and the weight of the sample, the apparent density (g/cm$^3$) of the foam was calculated.

(Average Cell Diameter)

The average cell diameter of a resin foam was determined as follows.
The average cell diameter of a resin foam was determined by capturing an enlarged image of a cellular portion of a resin-foam cross section using a digital microscope (trade name "VHX-600" supplied by Keyence Corporation), measuring the area of all the cells appeared in a definite area (1 mm$^2$) of the cut surface, converting the area to the equivalent circle diameter, and then averaging it with the number of cells.
Note that image analysis software (trade name "WIN ROOF" supplied by Mitani Corporation) was used for image analysis.

(Repulsive Stress at 80% Compression (80% Repulsive Load, 80% Compressive Hardness))

The repulsive stress at 80% compression of a resin foam was determined as follows.

The repulsive stress at 80% compression was measured according to the method for measuring a compressive hardness prescribed in JIS K 6767.

Specifically, a 30 mm square test piece in a sheet form having a thickness of 0.5 mm was obtained from a resin foam, and the test piece was compressed by 80% of the initial thickness at a rate of compression of 10 mm/min in a 23°C atmosphere, wherein the resulting stress (N) was converted into a value per unit area (1 cm$^2$), thus obtaining a repulsive stress at 80% compression.

(Repulsive Stress at 50% Compression (50% Repulsive Load, 50% Compressive Hardness))

The repulsive stress at 50% compression of a resin foam was obtained in the same manner as in the case of the above repulsive stress at 80% compression except that the test piece was compressed by 50% of the initial thickness.

(Breaking Strength, Elongation at Break)

With respect to the breaking strength and the elongation at break of a resin foam, the breaking strength (tensile strength) (MPa) and elongation at break (%) (elongation) in the MD direction were determined based on the paragraph of the tensile strength and elongation in JIS K 6767.

Note that a resin foam having a thickness of 0.5 mm was used as a test piece.

(Tensile Modulus of Elasticity)

The tensile test was performed according to JIS K 6767 to obtain a stress strain curve, and the tensile modulus of elasticity was calculated based on the following formula from the inclination in the elastic region of the stress strain curve obtained. Specifically, the tensile modulus of elasticity was determined from the ratio of stress to the strain corresponding to the stress in the elastic region of the stress strain curve.

$$\text{Tensile modulus of elasticity (MPa)} = (\text{stress})/(\text{strain})$$

[Table 1]

Table 1

| | Example 1 | Example 2 | Example 3 | Example 4 | Reference Example 5 | Comparative Example 1 | Comparative Example 2 | Comparative Example 3 |
|---|---|---|---|---|---|---|---|---|
| Apparent density (g/cm$^3$) | 0.05 | 0.05 | 0.06 | 0.07 | 0.04 | 0.04 | 0.15 | 0.22 |
| Average cell diameter ($\mu$m) | 80 | 80 | 70 | 50 | 150 | 80 | 160 | 130 |
| Repulsive stress at 50% compression (50% repulsive load) (N/cm$^2$) | 1.2 | 1.2 | 1.6 | 1.8 | 1.7 | 1.7 | 0.7 | 8.6 |
| Repulsive stress at 80% compression (80% repulsive load) (N/cm$^2$) | 3.9 | 3.2 | 5.1 | 5.8 | 5.2 | 4.6 | 9.5 | 31.7 |
| Tensile modulus of elasticity (MPa) | 9.6 | 6.6 | 10.8 | 12.1 | 8.6 | 4.1 | 234.0 | 13.7 |
| Breaking strength (MPa) | 0.86 | 0.74 | 0.95 | 1.00 | 0.79 | 1.14 | 21.7 | 4.73 |
| Elongation at break (%) | 101.3 | 69.4 | 92.7 | 85.3 | 110.1 | 202.5 | 105.0 | 626.3 |

(Evaluations)

The resin foams of examples and comparative examples were evaluated for dustproofness by measuring a dustproofness index and further evaluated for assemblability by measuring spreadability. The results are shown in Table 2.

(Measurement of Dustproofness Index)

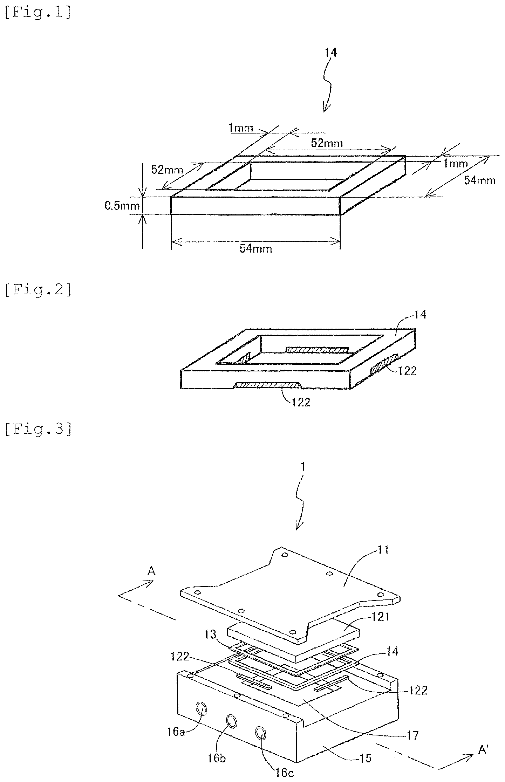

The resin foam was subjected to punching to obtain a frame-shaped test piece. The test piece is a square-shaped frame having a thickness of 0.5 mm, a width of 1.0 mm, and an edge length of 54 mm, and the opening of the frame is a square having an edge length of 52 mm. Note that a schematic outline view of the test piece is shown in Figure 1.

The ratio of the particles passed when the test piece is compressed by 50% of the initial thickness (dustproofness index (%)) was measured by the following method for measuring the dustproofness index using the following dustproofness testing instrument. Measurement was performed for the case where particles having a diameter of 0.5 mm (0.5 mm particles) were used and the case where particles having a diameter of 1.0 mm (1.0 mm particles) were used. Further, in the measurement of the dustproofness index, a spacer for forming a step was inserted in each edge of the test piece to form steps as shown in Figure 2. Note that in Figure 2, reference numeral 14 denotes a test piece; and reference numeral 122 denotes a spacer for forming a step. The spacer 122 for forming a step has a rectangular parallelepiped shape and has a thickness of 0.1 mm, a length of 10 mm, and a width of 1 mm.

(Dustproofness Testing Instrument)

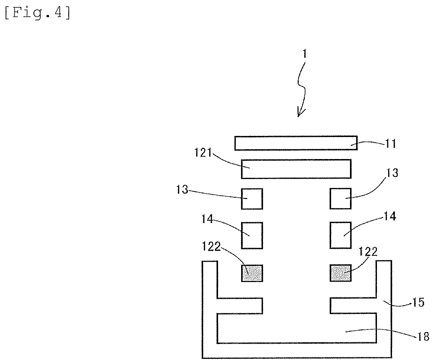

The dustproofness testing instrument is shown in Figures 3 and 4. Figure 3 is a schematic diagram of the dustproofness testing instrument, and Figure 4 is an end view of the sectioned part of the A-A' line of the dustproofness testing instrument.

In Figures 3 and 4, reference numeral 1 denotes a dustproofness testing instrument; reference numeral 11 denotes a ceiling panel; reference numeral 121 denotes a spacer; reference numeral 122 denotes a spacer for forming a step; reference numeral 13 denotes a double-coated pressure-sensitive adhesive tape; reference numeral 14 denotes a test piece; reference numeral 15 denotes a testing box; reference character 16a denotes a through hole; reference numeral 16b denotes a through hole; reference numeral 16c denotes a through hole; reference numeral 17 denotes an opening; and reference numeral 18 denotes a space. The ceiling panel 11 has a substantially rectangular tabular form and has cuts which constitute openings, whose plan views are rectangular (trapezoid). The spacer 121 is larger than the opening 17 and has a rectangular tabular form, and it is used for compressing the test piece 14 into a desired thickness. The double-coated pressure-sensitive adhesive tape 13 is a frame-shaped double-coated pressure-sensitive adhesive tape which is of a substrate-less type and has a thickness of 80 $\mu$m, and it is used for fixing the spacer 121 to the test piece 14. The through hole 16a is connected to a metering pump via a pipe joint. The through hole 16b is connected to a differential pressure gauge via a pipe joint. The through hole 16c is connected to a needle valve via a pipe joint. In the dustproofness testing instrument 1, the space 18 is formed inside the instrument by screwing the ceiling panel 11 with the testing box 15. The resulting space 18 is in a substantially rectangular parallelepiped form and may be hermetically sealed. The opening 17 is an opening of the space 18. Further, the ceiling panel 11 has cuts which constitute openings, whose plan views are rectangular (trapezoid).

The test piece 14 was attached to the dustproofness testing instrument as follows. The spacer 121 was attached below the bottom of the ceiling panel 11 facing the opening 17 so that the spacer 121 faces the entire surface of the opening 17. The spacer 121 is larger than the opening 17 and has a rectangular tabular form. The test piece 14 was attached via the double-coated pressure-sensitive adhesive tape 13 at a position of the bottom of the spacer 121 facing the opening 17. The test piece 14 has a window having a size substantially the same as that of the opening 17. Next, the spacer 122 for forming a step was inserted into the lower part of each edge of the test piece 14, and then the ceiling panel 11 was screwed to the testing box 15. Thus, the test piece 14 was attached to the dustproofness testing instrument. The test piece 14 is compressed in a thickness direction by the spacer 121 and the periphery of the opening 17. The compression ratio of the test piece 14 was regulated to 50% compression (a state compressed by 50% of the initial thickness) by regulating the thickness of the spacer 121. Note that when the ceiling panel 11 and the testing box 15 are screwed with each other, the space 18 in the testing box is hermetically sealed by the test piece 14, the spacer 122, the double-coated pressure-sensitive adhesive tape 13, and the spacer 121.

(Method for Measuring Dustproofness Index)

After attaching the test piece to the dustproofness testing instrument as described above, the dustproofness testing instrument to which the test piece had been attached was arranged in a dust box, which was then hermetically sealed. Note that the dust box is connected to a dust supply unit and a particle counter. Further, the through hole 16b of the dustproofness testing instrument is connected to the particle counter via a pipe joint.

Next, particles having a predetermined diameter were supplied to the dust box so that the count (number) of particles was allowed to be substantially constant at around 100000 using the dust supply unit and the particle counter both connected to the dust box. The count of particles at this time was defined as the number P0 of particles in the atmosphere.

Next, aspiration was performed at an aspiration rate of 0.5 L/min for 30 minutes using a metering pump connected to the through hole 16a in a state where the needle valve connected to the through hole 16c of the dustproofness testing instrument is closed. After the aspiration, the number of particles in the space 18 of the dustproofness testing instrument was measured with the particle counter, and the count of particles at this time was defined as the number Pf of particles passing through the foam.

Then, the dustproofness index was determined from the following formula.

$$\text{Dustproofness Index (\%)} = (P0 - Pf)/P0 \times 100$$

P0: The number of particles in the atmosphere
Pf: The number of particles passing through the foam

(Assemblability)

The assemblability was evaluated by measuring "spreadability (0.5 N)" and "spreadability (1.0 N)".

(Spreadability (0.5 N))

A foam was cut in the MD direction to obtain a test piece in a sheet form having a thickness of 0.5 mm, a width of 3 mm, and a length of 30 mm.

The test piece was drawn in the length direction under a load of 0.5 N in a state where an end of the test piece in the length direction was fixed, and the length of the test piece after drawing was measured.

Then, the spreadability (%) was determined from the following formula.

$$\text{Spreadability (\%)} = [(\text{length of test piece after drawing}) - (\text{length of initial test piece})]/(\text{length of initial test piece}) \times 100$$

The "spreadability (0.5 N)" (spreadability under 0.5 N) can be determined to be good when it is 5.0% or less.

(Spreadability (1.0 N))

The spreadability (%) was determined in the same manner as in the spreadability (0.5 N) as described above except that the load was set to 1.0 N.

The "spreadability (1.0 N)" (spreadability under 1.0 N) can be determined to be good when it is 10.0% or less.

[Table 2]

Table 2

| | | Example 1 | Example 2 | Example 3 | Example 4 | Reference Example 5 | Comparative Example 1 | Comparative Example 2 | Comparative Example 3 |
|---|---|---|---|---|---|---|---|---|---|
| Dustproofness (with step) | 0.5 mm particle (%) | 100 | 100 | 100 | 100 | 100 | 100 | 71 | 97 |
| | 1.0 mm particle (%) | 100 | 100 | 100 | 100 | 100 | 100 | 91 | 99 |
| Assemblability (Attaching properties) | Spreadability (0.5N) (%) | 3.7 | 2.6 | 3.2 | 2.8 | 4.1 | 6.8 | 0.0 | 1.5 |
| | Spreadability (1.0N) (%) | 7.2 | 4.9 | 6.8 | 6.2 | 7.8 | 23.8 | 0.0 | 10.2 |

From Tables 1 and 2, it has been verified that the resin foams of examples are resin foams having a small repulsive stress at 50% compression and a small repulsive stress at 80% compression, and the resin foams have good followability and exhibit excellent dustproofness, particularly exhibit excellent dustproofness even when the resin foams have steps.

Further, it has been verified that the resin foams of examples are not easily stretched from the evaluation of the elongation at break, and that the workability in the assembly such as bonding has been improved.

Furthermore, it has been verified that the resin foams of examples are not easily stretched from the evaluation of spreadability in which actual assembling of the resin foams has been assumed. Therefore, the resin foams of examples can be bonded together to size at the time of assembly.

On the other hand, it has been verified that the foam of comparative example 1 has a low tensile modulus of elasticity, and it is easily stretched from the evaluation of spreadability. Therefore, the foam of comparative example 1 was difficult to bond together to size at the time of assembly.

Further, the foams of comparative examples 2 and 3 have a large repulsive stress at 50% compression and a large repulsive stress at 80% compression, and they are hard. Therefore, these foams are poor in followability, and it was impossible to obtain sufficient dustproofness (particularly, dustproofness in the case of having steps).

Reference Signs List

| | |
|---|---|
| 1 | Dustproofness testing instrument |
| 11 | Ceiling panel |
| 121 | Spacer |
| 122 | Spacer for forming steps |
| 13 | Double-coated pressure-sensitive adhesive tape |
| 14 | Test piece |
| 15 | Testing box |
| 16a | Through hole |
| 16b | Through hole |
| 16c | Through hole |
| 17 | Opening |
| 18 | Space |

**Claims**

1. A resin foam having a repulsive stress at 80% compression of 1.0 to 9.0 $N/cm^2$ and a tensile modulus of elasticity of 5.0 to 14.0 MPa, the repulsive stress at 80% compression being defined as a repulsive stress when a resin foam is compressed by 80% of the initial thickness, and the tensile modulus of elasticity and the repulsive stress at 80% compression being determined in accordance with JIS K6767,

   wherein the resin foam has an average cell diameter of 15 to 100 $\mu$m and an apparent density of 0.01 to 0.10 $g/cm^3$, the average cell diameter being determined by capturing an enlarged image of a cellular portion of a resin-foam cross section using a microscope, measuring the area of all the cells appeared in a definite area (1 $mm^2$) of the cut surface, converting the area to the equivalent circle diameter, and then averaging it with the number of cells; and
   wherein the resin foam comprises a polypropylene and an olefinic thermoplastic vulcanizate (TPV).

2. The resin foam according to claim 1, wherein the resin foam is formed through the steps of impregnating a resin composition with an inert gas and subjecting the impregnated resin composition to decompression.

3. The resin foam according to claim 2, where the inert gas is carbon dioxide.

4. The resin foam according to claim 2 or 3, wherein the inert gas is in a supercritical state.

5. The resin foam according to any one of claims 1 to 4, wherein the resin foam has a breaking strength of 0.60 to 1.10 MPa, the breaking strength being determined based on JIS K6767.

6. The resin foam according to any one of claims 1 to 5, wherein the resin foam has an elongation at break of 50 to 200%, the elongation at break being determined based on JIS K6767.

7. The resin foam according to any one of claims 1 to 6, wherein the thickness of the resin foam is 0.1 to 2.0 mm.

8. A foam sealing material comprising a resin foam according to any one of claims 1 to 7.

9. The foam sealing material according to claim 8, wherein an adhesive layer is formed on the resin foam.

10. The foam sealing material according to claim 9, wherein the adhesive layer is formed through a film layer.

11. The foam sealing material according to claim 8 or 9, wherein the adhesive layer is an acrylic pressure-sensitive adhesive layer.

**Patentansprüche**

1. Ein Harzschaum mit einer Abstoßungsspannung bei 80% Kompressionslast von 1,0 bis 9,0 N/cm$^2$ und einem Zugelastizitätsmodul von 5,0 bis 14,0 MPa, wobei die Abstoßungsspannung bei 80% Kompressionslast als Abstoßungsspannung bei Zusammendrücken des Harzschaums um 80% der Ausgangsdicke definiert ist, und der Zugelastizitätsmodul und die Abstoßungsspannung bei 80% Kompression gemäß JIS K6767 bestimmt werden,

   wobei der Harzschaum einen durchschnittlichen Zellendurchmesser von 15 bis 100 $\mu$m und eine Rohdichte von 0,01 bis 0,10 g/cm$^3$ aufweist, wobei der durchschnittliche Zellendurchmesser gemessen wird, indem ein vergrößertes Bild eines zellulären Teils eines Harzschaumquerschnitts unter Verwendung eines Mikroskops aufgenommen wird, die Fläche aller Zellen in einem bestimmten Bereich (1 mm$^2$) der Schnittfläche gemessen wird, die gemessene Fläche in den äquivalenten Kreisdurchmesser umgerechnet und über die Anzahl der Zellen gemittelt wird; und
   wobei der Harzschaum ein Polypropylen und ein olefinisches thermoplastisches Vulkanisat (TPV) umfasst.

2. Harzschaum nach Anspruch 1, wobei der Harzschaum durch Imprägnieren einer Harzzusammensetzung mit einem Inertgas und einer Dekompression der imprägnierten Harzzusammensetzung gebildet wird.

3. Harzschaum nach Anspruch 2, wobei das Inertgas Kohlendioxid ist.

4. Harzschaum nach Anspruch 2 oder 3, wobei sich das Inertgas in einem überkritischen Zustand befindet.

5. Harzschaum nach einem der Ansprüche 1 bis 4, wobei der Harzschaum eine Bruchfestigkeit von 0,60 bis 1,10 MPa aufweist, wobei die Bruchfestigkeit gemäß JIS K6767 bestimmt wird.

6. Harzschaum nach einem der Ansprüche 1 bis 5, wobei der Harzschaum eine Bruchdehnung von 50 bis 200% aufweist, wobei die Bruchdehnung gemäß JIS K6767 bestimmt wird.

7. Harzschaum nach einem der Ansprüche 1 bis 6, wobei die Dicke des Harzschaums 0,1 bis 2,0 mm beträgt.

8. Schaumdichtungsmaterial, umfassend einen Harzschaum nach einem der Ansprüche 1 bis 7.

9. Schaumdichtungsmaterial nach Anspruch 8, wobei eine Klebschicht auf dem Harzschaum gebildet ist.

10. Schaumdichtungsmaterial nach Anspruch 9, wobei die Klebschicht durch eine Folienschicht gebildet ist.

11. Schaumdichtungsmaterial nach Anspruch 8 oder 9, wobei die Klebschicht eine druckempfindliche Acrylklebstoffschicht ist.

**Revendications**

1. Mousse de résine ayant une contrainte répulsive, sous une compression de 80 %, de 1,0 à 9,0 N/cm$^2$ et un module

de traction d'élasticité de 5,0 à 14,0 MPa, la contrainte répulsive sous une compression de 80 % étant définie comme une contrainte répulsive lorsqu'une mousse de résine est comprimée à 80 % de l'épaisseur initiale, et le module de traction d'élasticité et la contrainte répulsive sous une compression de 80 % étant déterminés conformément au document JIS K6767,

la mousse de résine ayant un diamètre moyen d'alvéole de 15 à 100 $\mu$m et une densité apparente de 0,01 à 0,10 g/cm$^3$, le diamètre moyen d'alvéole étant déterminé en capturant une image agrandie d'une partie alvéolaire d'une coupe transversale de la mousse de résine à l'aide d'un microscope, en mesurant la surface de tous les alvéoles visibles sur une surface donnée (1 mm$^2$) de la surface de coupe, en convertissant la surface en diamètre de cercle équivalent, puis en en calculant la moyenne pour le nombre d'alvéoles ; et

la mousse de résine comprenant un polypropylène et un vulcanisat thermoplastique oléfinique (TPV).

2. Mousse de résine selon la revendication 1, la mousse de résine étant formée par les étapes consistant à imprégner une composition de résine avec un gaz inerte et soumettre la composition de résine imprégnée à une décompression.

3. Mousse de résine selon la revendication 2, dans laquelle le gaz inerte est le dioxyde de carbone.

4. Mousse de résine selon la revendication 2 ou 3, dans laquelle le gaz inerte est dans un état supercritique.

5. Mousse de résine selon l'une quelconque des revendications 1 à 4, la mousse de résine ayant une résistance à la rupture de 0,60 à 1,10 MPa, la résistance à la rupture étant déterminée d'après le document JIS K6767.

6. Mousse de résine selon l'une quelconque des revendications 1 à 5, la mousse de résine ayant un allongement à la rupture de 50 à 200 %, l'allongement à la rupture étant déterminé d'après le document JIS K6767.

7. Mousse de résine selon l'une quelconque des revendications 1 à 6, dans laquelle l'épaisseur de la mousse de résine va de 0,1 à 2,0 mm.

8. Matériau d'étanchéité en mousse comprenant une mousse de résine selon l'une quelconque des revendications 1 à 7.

9. Matériau d'étanchéité en mousse selon la revendication 8, dans lequel une couche d'adhésif est formée sur la mousse de résine.

10. Matériau d'étanchéité en mousse selon la revendication 9, dans lequel la couche d'adhésif est formée par le biais d'une couche pelliculaire.

11. Matériau d'étanchéité en mousse selon la revendication 8 ou 9, dans lequel la couche d'adhésif est une couche d'adhésif sensible à la pression.

[Fig.1]

14

1mm
52mm
52mm
1mm
54mm
0.5mm
54mm

[Fig.2]

14
122
122

[Fig.3]

1

A
11
121
13
122
14
122
16a
17
16b
15
16c
A'

[Fig.4]

**EP 2 546 292 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005227392 A
- JP 2005097566 A
- EP 2000500 A1
- US 2010233457 A1